# EUROPEAN PATENT SPECIFICATION

(11) **EP 4 471 574 B1**
(45) Date of publication and mention of the grant of the patent: **25.11.2026**
(21) Application number: 22928166.2
(22) Date of filing: 29.08.2022
(51) Int. Cl.: G06F 21/31, G06F 21/44, G06F 8/71, G06F 8/20, G06F 11/3698

(54) **REMOTE DEVELOPMENT METHOD AND DEVICE**
FERNENTWICKLUNGSVERFAHREN UND -VORRICHTUNG
PROCÉDÉ ET DISPOSITIF DE DÉVELOPPEMENT À DISTANCE

(30) Priority: 25.02.2022 RU 2022105127
(43) Date of publication of application: 04.12.2024
(73) Proprietor: Huawei Cloud Computing Technologies Co., Ltd., Guiyang, Guizhou, 550025 (CN)
(72) Inventor: WANG, Yawei, Guiyang, Guizhou 550025 (CN); LVOV, Konstantin, Guiyang, Guizhou 550025 (CN); PETROCHENKO, Pavel, Guiyang, Guizhou 550025 (CN); DENISENKO, Denis, Guiyang, Guizhou 550025 (CN); SELEZNEV, Ilya, Guiyang, Guizhou 550025 (CN)
(74) Representative: Pfenning, Meinig & Partner mbB
(86) International application number: PCT/CN2022/115580
(87) International publication number: WO 2023/159900

(56) References cited:
- WO-A1-2021/133409
- WO-A1-2021/179842
- CN-A- 109 104 467
- CN-A- 113 268 720
- CN-A- 113 268 720
- CN-A- 113 391 796
- US-A1- 2016 066 134
- US-A1- 2018 218 046
- US-B1- 8 234 620

## Description

### TECHNICAL FIELD

Embodiments of this application relate to the field of information technologies, and more specifically, to a remote development method and an apparatus.

### BACKGROUND

With an increase in complexity of software development projects, requirements on a development environment and a tool of software development are becoming increasingly higher. Many projects need to be completed in a dedicated development environment, and a local environment can hardly meet a development requirement. For example, development of some projects needs support of a large memory or a high processing capability, and the local environment cannot meet this requirement.

The software development may be performed in a remote environment by connecting the local environment to the remote environment. For example, remote development is implemented through interaction between an integrated development environment (integrated development environment, IDE) frontend deployed in the local environment and an IDE backend deployed in the remote environment. However, security in a process of interaction between the remote environment and the local environment can hardly be ensured.

WO2021/179842 A1 discloses a method that network traffic between the user apparatus and the IDE instance does not need to be forwarded by means of the management apparatus by decoupling the management apparatus from the resource providing apparatus.

CN 113268720 A discloses a method that when the front end initiates a request, if the front end has a unique identifier, the unique identifier is sent to the rear end; if the unique identifier does not exist, a user name and a password are sent to the back end; the back end can perform verification no matter what kind of information is sent; and a request result can be given according to the verification result.

US 2016066134 A1 discloses a method includes receiving a wireless connection request at a backend computing device from a user device to allow wireless connection of the user device to a network through an access point located at a venue.

US 8234620 B1 discloses a method for software development that includes receiving, by a computing resource broker, a request to perform a software development operation on a software program using a computing resource.

### SUMMARY

Embodiments of this application provide a remote development method and an apparatus, to improve security of remote development.

According to a first aspect, an embodiment of this application provides a remote development method, applied to an IDE, where the method includes: A first IDE backend instance receives a first request from an initiator, where the first request carries indication information. The first IDE backend instance performs verification based on the indication information of the first request, and responds to the first request when the verification succeeds. The first IDE backend instance receives a second request from the initiator, where the second request carries the indication information. The first IDE backend instance performs verification based on the indication information of the second request, and responds to the second request when the verification succeeds.

In solutions in embodiments of this application, when the initiator initiates different requests, all the requests need to carry the indication information. After receiving the different requests, the first IDE backend instance needs to perform verification for each of the requests, so that security of remote development can be further improved, and access by an unauthorized user can be avoided. For example, after obtaining a listening port of the first IDE backend instance, the unauthorized user pretends to be the initiator to initiate a request. In this embodiment of this application, after receiving the different requests, the first IDE backend instance needs to perform the verification for each of the requests, so that the security of the remote development can be further improved, and access by the unauthorized user can be avoided.

With reference to the first aspect, in a possible implementation of the first aspect, the indication information of the first request indicates a user associated with the first request, and that the verification succeeds includes that a user corresponding to the first IDE backend instance is the same as the user associated with the first request.

Different IDE backend instances correspond to different users. In other words, the IDE backend instances corresponding to the different users are isolated.

In this embodiment of this application, the different users may start the different IDE backend instances in a same remote environment. This helps ensure that runtime data of development environments of the different users is isolated. The IDE backend instance may perform verification on an identity of the user, and allow access only by a user on which the verification succeeds. This improves the security of the remote development.

With reference to the first aspect, in a possible implementation of the first aspect, the indication information includes a user ID.

With reference to the first aspect, in a possible implementation of the first aspect, the initiator is a first IDE frontend instance.

With reference to the first aspect, in a possible implementation of the first aspect, the initiator is a second IDE backend instance.

In this embodiment of this application, the verification is performed based on identity information of the user, so that unauthorized access can be denied, for example, unauthorized access by another IDE backend instance in a remote environment can be denied, thereby preventing user data leakage, and helping improve the security.

With reference to the first aspect, in a possible implementation of the first aspect, the indication information includes a token file of the user associated with the first request.

In the solution in this embodiment of this application, the verification is performed based on the token, so that security of a connection between an IDE frontend and an IDE backend can be improved.

With reference to the first aspect, in a possible implementation of the first aspect, the indication information indicates a version used by the initiator, and that the verification succeeds includes that a version used by the first IDE backend instance matches the version indicated by the indication information.

In the solution in this embodiment of this application, consistency between frontend and backend versions is ensured through version matching between IDE frontend and backend instances. This helps prevent intrusion of the unauthorized user, and improves the security of the connection between the IDE frontend and the IDE backend.

With reference to the first aspect, in a possible implementation of the first aspect, responding to the first request includes: obtaining a file corresponding to the first request; decrypting the file; and performing a response operation based on a decrypted file.

In this embodiment of this application, transmission of a file in the IDE backend is performed in an encrypted form, so that security of an IDE backend program can be improved. In addition, a user is unaware of the whole process. In other words, the solution can improve security of the IDE backend when ensuring user experience.

With reference to the first aspect, in a possible implementation of the first aspect, the first request and the second request are requests received by the first IDE backend instance in a form of message packets.

In this embodiment of this application, messages are packaged, and interaction between the IDE frontend and the IDE backend is implemented based on packaged data, so that network traffic can be reduced, and performance of interaction between the frontend and the backend can be improved.

With reference to the first aspect, in a possible implementation of the first aspect, the message packet is used to carry N messages, each of the N messages includes M fields, field values of the M fields in the message packet are M groups of data, each of the M groups of data indicates field values of corresponding fields in the N messages, M ≥ 1, M is an integer, N ≥ 2, and N is an integer.

With reference to the first aspect, in a possible implementation of the first aspect, the M fields include M₁ first-class fields, field values of first fields in the N messages are different, the first field is any one of the M₁ first-class fields, field values of the M₁ first-class fields in the message packet are M₁ groups of data in the M groups of data, N pieces of data included in an i^{th} group of data in the M₁ groups of data respectively indicate field values of an i^{th} first-class field in the M₁ first-class fields in the N messages, 1 ≤ M₁ ≤ M, M₁ is an integer, and i = 1, 2, ..., M₁.

With reference to the first aspect, in a possible implementation of the first aspect, the M fields include M₂ second-class fields, field values of second fields in at least two of the N messages are the same, the second field is any one of the M₂ second-class fields, field values of the M₂ second-class fields in the message packet are M₂ groups of data in the M groups of data, L pieces of data included in a j^{th} group of data in the M₂ groups of data indicate field values of a j^{th} second-class field in the M₂ second-class fields in the N messages, 1 ≤ M₂ ≤ M, M₂ is an integer, j = 1, 2, ..., M₂, L is less than N, and L is a positive integer.

In this embodiment of this application, when a plurality of messages are packaged, for a field, if there are same field values in the plurality of messages, the same field values may be compressed, and only one of the field values is retained. In other words, for the field, the message packet may include only a different field value of the field in each of the plurality of messages. Based on this, this packaging manner can reduce a size of the message packet, and further reduce the network traffic.

With reference to the first aspect, in a possible implementation of the first aspect, the M fields include M₃ third-class fields, field values of third fields in the N messages can be determined based on a function, the third field is any one of the M₃ third-class fields, field values of the M₃ third-class fields in the message packet are M₃ groups of data in the M groups of data, a function included in a k^{th} group of data in the M₃ groups of data is used to determine field values of a k^{th} third-class field in the M₃ third-class fields in the N messages, 1 ≤ M₃ ≤ M, M₃ is an integer, and k = 1, 2, ..., M₃.

In this embodiment of this application, when the plurality of messages are packaged, a function indicate corresponding field values. This packaging manner can reduce the size of the message packet, and further reduce the network traffic.

According to a second aspect, an embodiment of this application provides a remote development apparatus. The apparatus includes a unit configured to implement any one of the first aspect or the possible implementations of the first aspect.

According to a third aspect, an embodiment of this application provides a remote development system, including an initiator and a first IDE backend instance. The first IDE backend instance is configured to perform any one of the first aspect or the possible implementations of the first aspect.

According to a fourth aspect, an embodiment of this application provides a computer device. The computer device includes a processor, and the processor is configured to: be coupled to a memory, and read and execute instructions and/or program code in the memory, to perform any one of the first aspect or the possible implementations of the first aspect.

According to a fifth aspect, an embodiment of this application provides a computer-readable storage medium. The computer-readable storage medium stores program code. When the computer storage medium is run on a computer, the computer is enabled to perform any one of the first aspect or the possible implementations of the first aspect.

According to a sixth aspect, an embodiment of this application provides a computer program product. The computer program product includes computer program code, and when the computer program code is run on a computer, the computer is enabled to perform any one of the first aspect or the possible implementations of the first aspect.

### BRIEF DESCRIPTION OF DRAWINGS

FIG. 1 is a block diagram of an architecture of a remote development system according to an embodiment of this application;
FIG. 2 is a schematic flowchart of establishing a connection between an IDE frontend and an IDE backend according to an embodiment of this application;
FIG. 3 is a schematic flowchart of a remote development method according to an embodiment of this application;
FIG. 4 is a diagram of isolation of IDE backend instances according to an embodiment of this application;
FIG. 5 is a diagram of an access relationship between a plurality of IDE backend instances according to an embodiment of this application;
FIG. 6 is a schematic flowchart of obtaining a token file according to an embodiment of this application;
FIG. 7 is a diagram of an access relationship between an IDE frontend version and an IDE backend version according to an embodiment of this application;
FIG. 8 is a schematic flowchart of data processing of an IDE backend according to an embodiment of this application;
FIG. 9 is a schematic flowchart of a data transmission method according to an embodiment of this application;
FIG. 10 is a schematic flowchart of another remote development method according to an embodiment of this application;
FIG. 11 is a block diagram of a remote development apparatus according to an embodiment of this application; and
FIG. 12 is a block diagram of a remote development system according to an embodiment of this application.

### DESCRIPTION OF EMBODIMENTS

The following describes technical solutions in embodiments in this application with reference to accompanying drawings.

The solutions in embodiments of this application may be applied to a remote development scenario. The following describes an example of the remote development scenario.

For example, the solutions in embodiments of this application may be applied to a cross-platform development scenario. The cross-platform development scenario is a scenario of developing an application for a computing system different from a computing system in a local environment. For example, the developed application needs to be run in a Linux system, but the computing system in the local environment is a Windows system.

For example, the solutions in embodiments of this application may be applied to a scenario of developing an application whose hardware resource requirement is higher than that of the local environment. In other words, the local environment cannot meet a requirement on a processing capability, a memory, or the like needed by the application. For example, the developed application may be a hyperscale server program. For another example, the developed application may be a deep learning application that needs a GPU computing resource.

For example, the solutions in embodiments of this application may be applied to a scenario of developing an application shared by a plurality of users. In other words, the application is jointly developed by the plurality of users. The solutions in embodiments of this application may be used to enable the plurality of users to perform software development in a same development environment, or allow the plurality of users to separately access a same development environment via their respective local environments, to perform software development.

In embodiments of this application, remote development is implemented through interaction between an integrated development environment (integrated development environment, IDE) frontend deployed in the local environment and an IDE backend deployed in a target environment (for example, a remote environment). The user may manage, via the IDE frontend, a file system and a process that are in the target environment, to perform operations such as remote encoding, remote debugging, and command running. The local environment can be connected to a plurality of target environments, to implement seamless switching. The IDE frontend can install any component from a network by using the local environment as a proxy.

To help a person skilled in the art better understand the technical solutions of this application, some terms and technologies related to this application are first described.

### 1. Integrated development environment (integrated development environment, IDE)

The IDE is an application used to provide a program development environment, and generally includes tools such as a code editor, a compiler, a debugger, and a graphical user interface. The IDE is a development software service suite that integrates code writing, analysis, compilation, and debugging functions.

Core capabilities related to editing in the IDE include code completion, reference lookup, error checking, intelligent jumping, syntax highlighting, code refactoring, and the like.

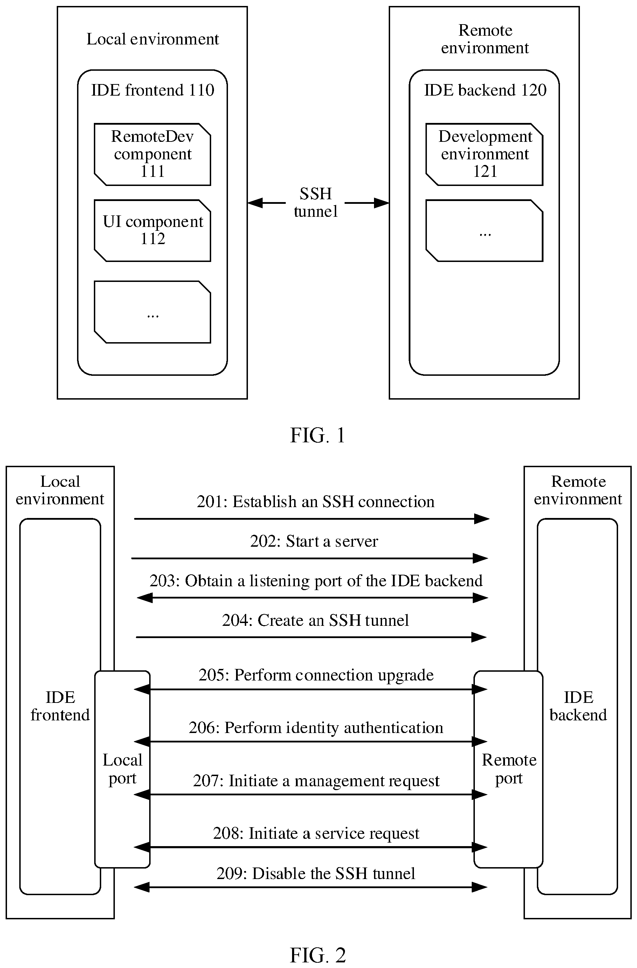

FIG. 1 is a block diagram of an architecture of a remote development system according to an embodiment of this application. As shown in FIG. 1, an IDE is divided into an IDE frontend 110 and an IDE backend 120. The IDE frontend 110 and the IDE backend 120 are connected via a secure shell (secure shell, SSH) tunnel (tunnel). In other words, a connection protocol between the IDE frontend and the IDE backend is the SSH protocol.

The IDE frontend 110 may be deployed in a local environment, and the IDE backend 120 may be deployed in a remote environment. The remote environment is an end opposite to the local environment.

An environment may include a plurality of types, such as a physical machine, a virtual machine (virtual machine), or a container. For example, the remote environment may include any one of a remote physical machine (remote machine), a virtual machine, or a container. For example, the remote environment may be a cloud server. For example, the local environment may be a terminal device, such as a desktop computer, a laptop computer, or a mobile phone.

As shown in FIG. 1, the IDE frontend 110 includes a remote development client component 111 and a user interface (user interface, UI) component 112. The remote development client component may also be referred to as a remote development (remote development, RemoteDEV) extension (extension). The UI component may also be referred to as a UI extension.

For example, the remote development client component 111 may be configured to: install a server, deploy the server, and start the server. The server may also be understood as an IDE backend. The remote development client component 111 may be configured to implement connection management, file management, process management, and the like.

For example, the UI component 112 is configured to implement interaction with a user, for example, receive data input by the user, and display data requested by the user.

The IDE backend 120 may include a development environment 121.

The development environment 121 may be configured to implement file system management, code compilation and debugging, terminal management, plug-in management, and the like.

It should be noted that the IDE components in FIG. 1 are merely examples. In actual application, the IDE may include more or fewer components. This is not limited in this embodiment of this application.

The IDE needs to be executed to implement functions such as code editing, compilation, and debugging. An application in a running state in a memory may be referred to as an instance (instance). In other words, an IDE backend in a running state in a memory of the remote environment may be referred to as an IDE backend instance. An IDE frontend in a running state in a memory of the local environment may be referred to as an IDE frontend instance.

### 2. JavaScript object notation (JavaScript object notation, JSON)-remote procedure call (remote procedure call, RPC)

RPC is to use a machine to call a function or a method on another machine in a parameter passing manner and obtain a response result.

A common RCP framework includes JSON-RPC. JSON-RPC is a stateless and lightweight RPC protocol that transmits content in a JSON manner. JSON is a lightweight data interchange format. In comparison with a general hypertext transfer protocol (hypertext transfer protocol, HTTP) request that calls a remote server based on a uniform resource identifier (uniform resource identifier, URI), JSON-RPC directly defines a name (for example, {"method": "getUser"}) of a to-be-called function in the content.

A JSON-RPC request is represented as a JSON object, and may include the following fields.
jsonrpc is used to specify a JSON-RPC version, which is set to 2.0.
id is a call identifier, and identifies a remote call process. A value of id needs to include a string and a numeric value.
method is a string of a name of a to-be-called method.
params indicates a parameter passed in the method, and if there is no parameter, null [] is passed in.

When an RPC call is initiated, a server needs to respond to all messages except a notification. A response is represented as a JSON object, and may include the following fields.
jsonrpc is used to specify a JSON-RPC version, which is set to 2.0.
id is a call identifier, and identifies a remote call process. A value of id needs to include a string and a numeric value.
result indicates a response result displayed when the call succeeds.
error indicates error information displayed when the call fails.

### 3. Identity authentication based on a token (token)

The token is sent by the server to a client when the client sends a request to the server in a specific manner and the server allows the request. The client may use the token to access a resource carried by the server.

There are many manners to implement identity authentication based on the token, and a general process is as follows:
(1) The user sends a request based on a user name and a password.
(2) A program performs the authentication.
(3) The program returns a signed token to the client.
(4) The client stores the token, and each request sent by the client carries the token.
(5) The server verifies the token and returns data.

In embodiments of this application, remote development may be implemented via a connection between the IDE frontend instance and the IDE backend instance. For example, the remote environment may receive a request that is for creating the IDE backend instance and that is from the local environment. In response to the request, an IDE kernel is deployed in the remote environment to form the IDE backend instance. The connection is established between the IDE frontend instance of the local environment and the IDE backend instance of the remote environment, and data is transmitted based on the connection between the IDE frontend instance and the IDE backend instance, to implement the remote development. The IDE kernel may include a code file used to form the IDE backend instance. The code file includes a code snippet corresponding to a component in the IDE backend. Deploying the IDE kernel includes generating an executable file from the code file, for example, generating a software package, then placing the executable file into a target environment, and configuring the target environment to enable the executable file to be executed.

To better describe the solutions in embodiments of this application, the following describes, with reference to FIG. 2, an example of a procedure of establishing a connection between an IDE frontend instance and an IDE backend instance. The procedure shown in FIG. 2 includes the following steps.

201: Establish an SSH connection.

The SSH connection is established between a local environment and a remote environment.

202: Start an IDE backend.

An IDE frontend in the local environment starts the IDE backend in the remote environment, that is, creates the IDE backend instance.

The IDE backend may also be understood as a server (server). In other words, the IDE frontend starts the server. For example, the server may be an HTTP server.

For example, step 202 may include: checking a file system in the remote environment; running an installation program in the remote environment, where the installation program is used to install the server; and starting the installed server.

For example, the local environment may upload an IDE backend program file to the remote environment, to perform installation and configuration work.

203: Obtain a listening port of the IDE backend.

The IDE frontend obtains the listening port of the IDE backend.

After the IDE backend instance is started, information may be obtained through the listening port.

204: Create an SSH tunnel.

An SSH tunnel between a local port and a remote port is created, that is, local port:remote port.

205: Perform connection upgrade.

An HTTP connection is upgraded to a websocket (Websocket) connection.

206: Perform identity authentication.

The authentication is performed on an identity of a user who initiates a request.

207: Initiate a management request.

For example, the IDE frontend instance may initiate a management request for file system management, environment configuration management, terminal management, and the like to the IDE backend instance.

208: Initiate a service request.

For example, the IDE frontend instance may initiate a service request for code encoding, code debugging, code completion, code checking, and the like to the IDE backend instance.

209: Disable the SSH tunnel.

It should be understood that the procedure shown in FIG. 2 is merely an example. In actual application, the connection between the IDE frontend and the IDE backend may alternatively be implemented in another manner. This is not limited in this embodiment of this application.

An embodiment of this application provides a remote development method, where verification is performed on indication information carried in a request, and an IDE backend instance responds to the request after the verification succeeds, so that security of remote development can be improved.

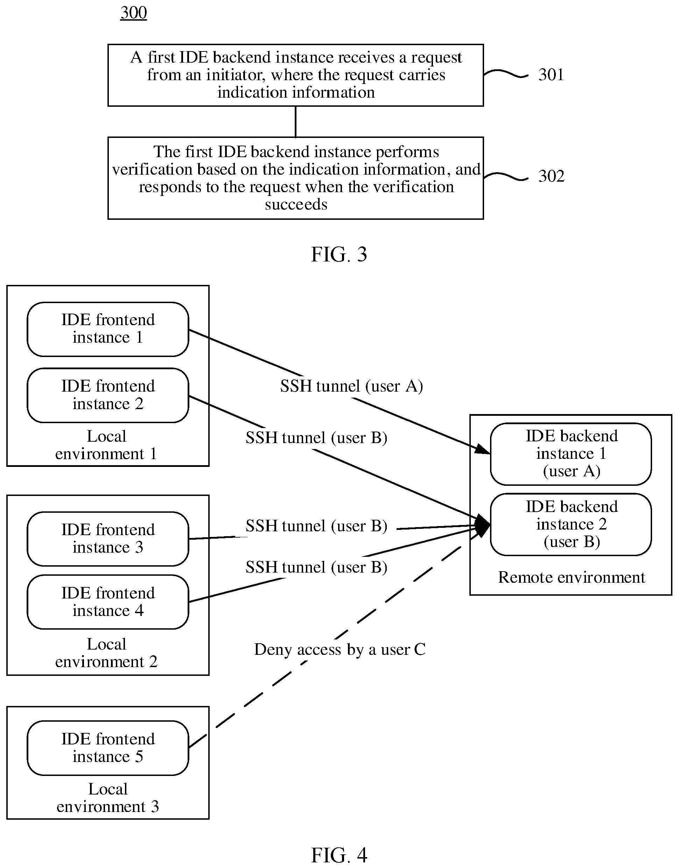

FIG. 3 is a schematic flowchart of a remote development method 300 according to an embodiment of this application. For example, the method 300 shown in FIG. 3 may be applied to the IDE shown in FIG. 1. For example, a connection between an IDE frontend and an IDE backend in FIG. 3 may be established in the procedure shown in FIG. 2.

The method 300 includes step 301 and step 302. The following describes step 301 and step 302.

301: A first IDE backend instance receives a request from an initiator, where the request carries indication information.

302: The first IDE backend instance performs verification based on the indication information of the request, and responds to the request when the verification succeeds.

Responding to the request is performing a response operation corresponding to the request.

It should be noted that "first" and "second" in "first IDE backend instance" and "second IDE backend instance" in embodiments of this application are merely used to distinguish between different IDE backend instances, and do not constitute a limitation on the solutions in embodiments of this application. "First" and "second" in "first IDE frontend instance" and "second IDE frontend instance" are merely used to distinguish between different IDE frontend instances, and do not constitute a limitation on the solutions in embodiments of this application.

In a possible implementation, the indication information indicates a user associated with the request. That the verification succeeds includes that a user corresponding to the first IDE backend instance is the same as the user associated with the request.

The user associated with the request is a user corresponding to the initiator. The user corresponding to the initiator of the request may also be understood as a user initiating the request. The user associated with the request is the user indicated by the indication information.

A user corresponding to an IDE backend instance may be understood as a user allowed to use the IDE backend instance. The user corresponding to the first IDE backend instance is a user allowed to use the first IDE backend instance.

For example, the user corresponding to the IDE backend instance may be a user who starts the IDE backend instance.

Different IDE backend instances correspond to different users. In other words, the IDE backend instances corresponding to the different users are isolated.

For example, as shown in FIG. 2, in step 201, SSH connection information is sent to the remote environment, where the connection information may carry identification information of the user. For example, the identification information of the user may be a user ID, and a format of the connection information may be user ID@IP address of the remote environment. The user ID indicates an identity of a user who initiates an SSH connection establishment request. If the user ID indicates a user A, in other words, the user A requests to establish the SSH connection, an IDE backend instance corresponding to the user A may be started in step 202. In other words, in step 202, the different IDE backend instances may be started for the different users based on connection information of SSH connections initiated by the different users.

The different users may perform software development in a same remote environment. In this embodiment of this application, the different users may start the different IDE backend instances in the same remote environment. This helps ensure that runtime data of development environments of the different users is isolated. The IDE backend instance may perform verification on an identity of a user, and allow access only by a user on which the verification succeeds. This improves security of remote development.

Optionally, the indication information may include identification information of the user.

In other words, the indication information of the request may include identification information of the user associated with the request.

For example, the identification information of the user may be a user ID. That the verification succeeds means that the user corresponding to the first IDE backend instance is the same as a user indicated by the user ID. In other words, the first IDE backend instance performs verification on the user ID, and responds to the request when the user corresponding to the first IDE backend instance is the same as the user indicated by the user ID. This manner may also be referred to as a user ID-based authentication manner.

Optionally, the initiator may be a first IDE frontend instance.

For example, the indication information carried in the request may include the user ID. The user indicated by the user ID is a user corresponding to the IDE frontend instance. In other words, the user indicated by the user ID is a user who initiates the request via the IDE frontend instance.

For example, the first IDE frontend instance initiates a request A (an example of the request) to the first IDE backend instance. The request A may carry the indication information, the indication information includes the user ID, and the user ID indicates the user corresponding to the first IDE frontend instance. After obtaining the request A through listening, the first IDE backend instance determines whether the user indicated by the user ID is the same as the user corresponding to the first IDE backend instance. When the user indicated by the user ID is the same as the user corresponding to the first IDE backend instance, the request A is responded to, and a corresponding response operation is performed. When the user indicated by the user ID is different from the user corresponding to the first IDE backend instance, the request A is denied.

For example, the request may be any request initiated by the first IDE frontend instance to the first IDE backend instance. In other words, any request may carry the indication information. For example, the request may be a request in any interaction phase between the IDE frontend instance and the IDE backend instance in FIG. 2.

The following uses an example in which the request is the management request in step 207 for description.

The IDE frontend instance initiates the management request to the IDE backend instance. The request carries the indication information, the indication information includes the user ID, and the user ID indicates a user corresponding to the IDE frontend. After listening to the request, the IDE backend instance determines whether the user indicated by the user ID is the same as a user corresponding to the IDE backend instance. When the user indicated by the user ID is the same as the user corresponding to the IDE backend instance, the IDE backend instance responds to the request, and allows access by the user corresponding to the IDE frontend instance, for example, environment configuration performed on the remote environment. When the user indicated by the user ID is different from the user corresponding to the IDE backend instance, the IDE backend instance denies access by the user corresponding to the IDE frontend instance.

It should be understood that the foregoing is merely an example, and the request may alternatively be another request initiated by the IDE frontend instance to the IDE backend instance. For example, the request may alternatively be the service request or the like in FIG. 2. This is not limited in this embodiment of this application.

FIG. 4 is a diagram of an access relationship between a plurality of IDE frontend instances and a plurality of IDE backend instances. As shown in FIG. 4, a remote environment may be connected to a plurality of local environments through SSH tunnels. For example, FIG. 4 shows three local environments, namely, a local environment 1, a local environment 2, and a local environment 3. The plurality of IDE frontend instances may be started in a same local environment. The plurality of IDE backend instances may be started in a same remote environment. As shown in FIG. 4, a user A starts an IDE frontend instance 1 in the local environment 1, and a user B starts an IDE frontend instance 2 in the local environment 1. The user B starts an IDE frontend instance 3 and an IDE frontend instance 4 in the local environment 2. A user C starts an IDE frontend instance 5 in the local environment 3. An IDE backend instance 1 corresponding to the user A and a backend instance 2 corresponding to the user B are started in the remote environment. Data transmission may be performed through an SSH tunnel between an IDE frontend instance corresponding to the user A and an IDE backend instance corresponding to the user A. Data transmission may be performed through an SSH tunnel between an IDE frontend instance corresponding to the user B and an IDE backend instance corresponding to the user B. As shown in FIG. 4, users corresponding to the IDE frontend instance 1 and the IDE backend instance 1 are both the user A, and the IDE frontend instance 1 may communicate with the IDE backend instance 1 through an SSH tunnel. Users corresponding to the IDE frontend instance 2, the IDE frontend instance 3, the IDE frontend instance 4, and the IDE backend instance 2 are the user B, and the IDE frontend instance 2, the IDE frontend instance 3, and the IDE frontend instance 4 may each communicate with the IDE backend instance 2 through an SSH tunnel. A user corresponding to the IDE frontend instance 5 is the user C, and a user corresponding to the IDE backend instance is the user B. The IDE frontend instance 5 cannot access the IDE backend instance 2.

Optionally, the initiator may be a second IDE backend instance.

For example, the indication information carried in the request may include the user ID. The user indicated by the user ID is a user corresponding to the second IDE backend instance. In other words, the user indicated by the user ID is a user who initiates the request via the second IDE backend instance.

In other words, the request may be initiated by the IDE frontend instance to the IDE backend instance, or by another IDE backend instance to the IDE backend instance.

As shown in FIG. 4, there may be a plurality of IDE backend instances simultaneously running in a same remote environment. If a local port listened on by an IDE backend instance corresponding to a user is discovered by another user, the another user has an opportunity to access the IDE backend instance. This results in user data leakage and a security risk.

For example, the request may be a connection request.

For example, a local HTTP port listened on by the IDE backend instance (an example of the first IDE backend instance) corresponding to the user A is discovered by the user B. The IDE backend instance (an example of the second IDE backend instance) corresponding to the user B may be connected to the port via a program, to obtain data of the user A. This poses a security risk.

For example, the first IDE backend instance obtains, through listening, a request B (an example of the request) initiated by the second IDE backend instance. The request B may carry the indication information, the indication information includes the user ID, and the user ID indicates a user corresponding to the second IDE backend instance that initiates the request. After obtaining the request B through listening, the first IDE backend instance determines whether the user indicated by the user ID is the same as a user corresponding to the first IDE backend instance. When the user indicated by the user ID is the same as the user corresponding to the first IDE backend instance, the request B is responded to, and a corresponding response operation is performed. When the user indicated by the user ID is different from the user corresponding to the first IDE backend instance, the request B is denied.

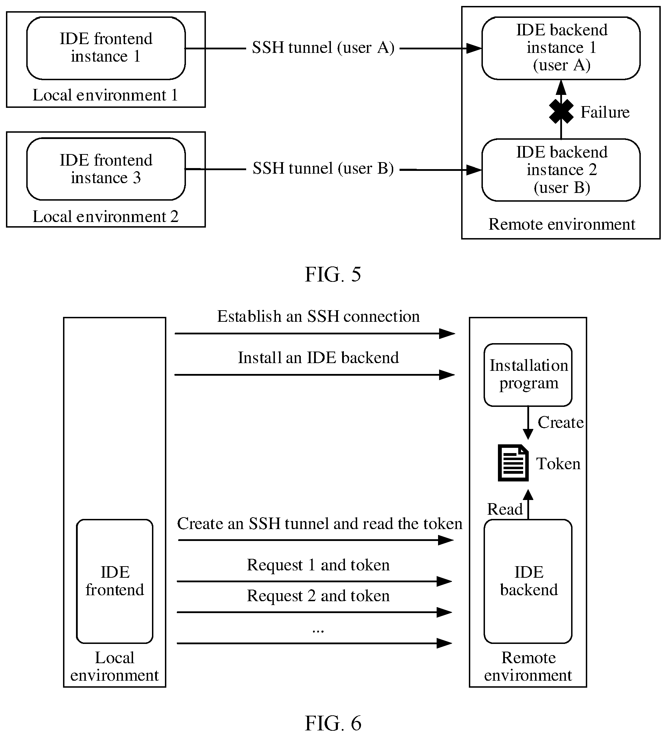

FIG. 5 is a diagram of an access relationship between IDE backend instances. As shown in FIG. 5, a remote environment is connected to a local environment 1 and a local environment 2. A user A starts an IDE frontend instance 1 in the local environment 1. A user B starts an IDE frontend instance 3 in the local environment 2. An IDE backend instance 1 corresponding to the user A and a backend instance 2 corresponding to the user B are started in the remote environment. The IDE frontend instance 1 may communicate with the IDE backend instance 1 through an SSH tunnel. The IDE frontend instance 3 may communicate with the IDE backend instance 2 through an SSH tunnel. The IDE backend instance 2 is connected to the IDE backend instance 1 via a program, to listen on a port of the IDE frontend instance 1, that is, to initiate a connection request. The connection request carries indication information, where the indication information includes a user ID, and the user ID indicates the user B. The IDE backend instance 1 performs verification on the connection request, in other words, performs the verification based on the user ID, and denies access by the IDE backend instance 2 after authentication fails.

In this embodiment of this application, the verification is performed based on identity information of a user, so that unauthorized access can be denied, for example, unauthorized access by another IDE backend instance in the remote environment can be denied, thereby preventing user data leakage, and helping improve security.

Optionally, the indication information may include a token (token) file of a user associated with the request. The token file may also be referred to as a token for short.

For example, the request may be initiated by an IDE frontend instance, and the token file of the user associated with the request may be used as an identity authentication password of the IDE frontend instance.

In other words, a first IDE backend instance performs verification based on the token file of the request, and responds to the request after the verification succeeds. This manner may also be referred to as a token-based authentication manner.

For example, the token of the user may be generated based on the user ID. The user is an authorized user of the token. For example, the token is generated by performing hash calculation based on the user ID. For the first IDE backend instance, a token on which verification can succeed is a token generated based on a user ID of a user corresponding to the first IDE backend instance.

The user ID may be determined from connection information. For example, the connection information may include the user ID and a remote environment address: port. In this case, the token may also be understood as being generated based on the connection information. The connection information may be the connection information of the SSH connection in FIG. 2. An IDE backend installation program may create the token file based on the connection information, to grant access permission only to a user indicated by the user ID.

It should be understood that the token may alternatively be generated based on other information. For example, the token may be determined based on a user ID and an identifier that is of an IDE backend instance. This improves complexity of the token, and further improves reliability of the token-based authentication manner. A generation manner of the token is not limited in this embodiment of this application.

The token may be sent in advance to an IDE frontend instance corresponding to the authorized user. Each request sent by the IDE frontend instance may carry the token.

FIG. 6 is a schematic flowchart of obtaining a token file. An SSH connection is established between a local environment and a remote environment. Connection information of the SSH connection may include a user ID, for example, the user ID indicates a user A. When installing an IDE backend, an installation program may create a token file based on the connection information of the SSH connection. The token file allows access only by the user indicated by the user ID, that is, authorizes the user A. When an IDE backend instance corresponding to user A is started, the token file is read and used as an identity authentication password of an IDE frontend instance corresponding to the user A. An SSH tunnel is created between the IDE frontend instance and the IDE backend instance. The IDE backend instance may send the token file to the IDE frontend instance, that is, the IDE frontend instance reads the token file. After the IDE frontend instance obtains the token file, when the IDE frontend instance initiates a request to the IDE backend instance, the request carries the token file. For example, as shown in FIG. 6, the IDE frontend instance initiates a request 1 to the IDE backend instance, and the request 1 carries the token file; and when the IDE frontend instance initiates a request 2 to the IDE backend instance, the request 2 carries the token file. It should be understood that FIG. 6 is merely an example, and any request initiated by the IDE frontend instance to the IDE backend instance may carry the token file. The IDE backend instance performs verification on the token, and responds to the request initiated by the IDE frontend instance after the verification succeeds. For an IDE frontend instance corresponding to another user, because the token of the user A cannot be obtained, when a request is initiated to the IDE backend instance, the IDE performs verification based on a token of the another user, and denies access by the another user after the verification fails.

It should be understood that the foregoing is merely an example of obtaining the token file, and does not constitute a limitation on the solutions in embodiments of this application.

In this way, in the solution in this embodiment of this application, the verification is performed based on the token, so that security of a connection between an IDE frontend and an IDE backend can be improved.

It should be understood that other information that can indicate an identity of a user may also be used as indication information. A specific type of the indication information is not limited in this embodiment of this application.

Optionally, the indication information indicates a version used by an initiator. That the verification succeeds means that a version used by a first IDE backend instance matches a version indicated by second indication information. In other words, that the verification succeeds means that the version used by the first IDE backend instance matches the version used by the initiator.

In other words, the first IDE backend instance performs verification on version information, and responds to the request when the version used by the first IDE backend instance matches the version used by the initiator. This manner may also be referred to as a version information-based authentication manner.

For example, the request may be initiated by a first IDE frontend instance. The indication information may include a version number of the first IDE frontend instance, for example, a commit (commit) ID. When a version number of the first IDE backend instance is the same as the version number of the first IDE frontend instance, the first IDE backend instance responds to the request.

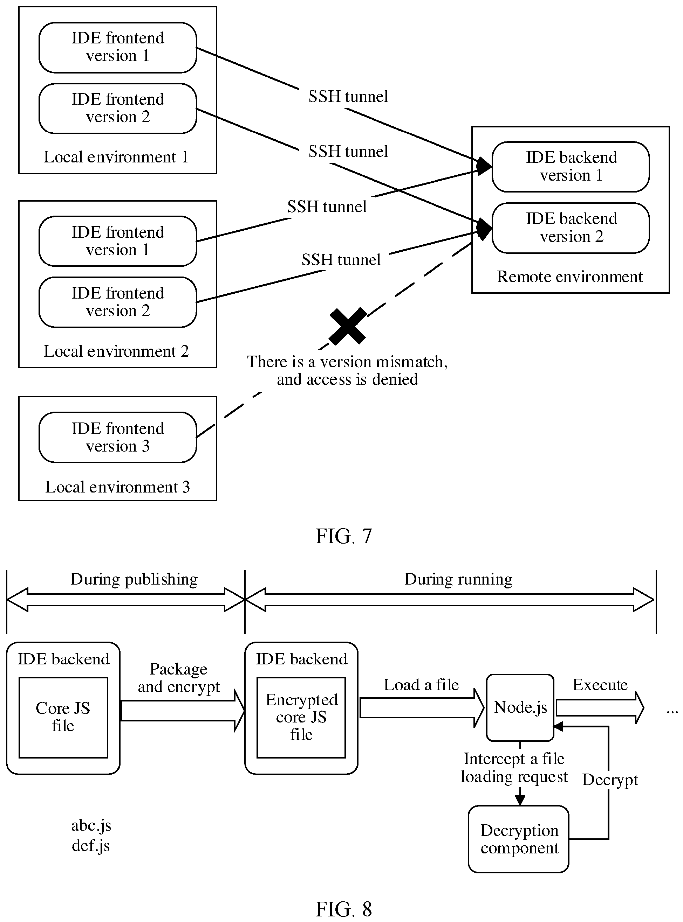

FIG. 7 is a diagram of an access relationship between a plurality of IDE frontend versions and a plurality of IDE backend versions. As shown in FIG. 7, IDE frontend versions used by two IDE frontend instances in a local environment 1 are respectively a version 1 and a version 2, namely, an IDE frontend version 1 and an IDE frontend version 2 in FIG. 7. IDE frontend versions used by two IDE frontend instances in a local environment 2 are respectively the version 1 and the version 2, namely, the IDE frontend version 1 and the IDE frontend version 2 in FIG. 7. An IDE frontend version used by an IDE frontend instance in a local environment 3 is a version 3, namely, an IDE frontend version 3 in FIG. 7. Two IDE backend versions used by two IDE backend instances in a remote environment are respectively a version 1 and a version 2. Data transmission may be performed between IDE frontend and backend instances of a same version. As shown in FIG. 7, an SSH tunnel may be established between the IDE frontend version 1 and an IDE backend version 1. Data transmission may be performed between the IDE frontend version 2 and an IDE backend version 2 through an SSH tunnel. In other words, an SSH tunnel may be established between an IDE frontend instance using the IDE frontend version 1 and an IDE backend instance using the IDE backend version 1, and an SSH tunnel may be established between an IDE frontend instance using the IDE frontend version 2 and an IDE backend instance using the IDE backend version 2. Data transmission cannot be performed between the IDE frontend version 3 and the IDE backend version 2. In other words, there is a version mismatch between an IDE frontend instance using the IDE frontend version 3 and the IDE backend instance using the IDE backend version 2, and the IDE backend instance denies access by the IDE frontend instance.

In the solution in this embodiment of this application, consistency between frontend and backend versions is ensured through version matching between IDE frontend and backend instances. This helps prevent intrusion of an unauthorized user, and improves security of a connection between an IDE frontend and an IDE backend.

A plurality of security authentication manners in embodiments of this application may be used in combination. This further improves the security of the connection between the frontend and the backend.

For example, in this embodiment of this application, different users correspond to different IDE backend instances, and an IDE backend instance may perform verification in manners such as the token-based authentication manner and the version information-based authentication manner, and respond to a request when the verification succeeds in all the manners, to further improve the security of the connection between the frontend and the backend.

For example, the IDE frontend instance 1 in FIG. 4 initiates a request to the IDE backend instance 1, and a user corresponding to the IDE frontend instance 1 and a user corresponding to the IDE backend instance 1 are both the user A. If a version used by the IDE frontend instance 1 matches a version used by the IDE backend instance 1, the IDE backend instance 1 responds to the request. If the version used by the IDE frontend instance 1 does not match the version used by the IDE backend instance 1, the IDE backend instance 1 denies access even if users corresponding to the IDE frontend instance 1 and the IDE backend instance 1 are the same.

For example, in this embodiment of this application, the different users correspond to the different IDE backend instances, and the IDE backend instance may perform the verification in manners such as the user ID-based authentication manner, the token-based authentication manner, and the version information-based authentication manner, and respond to the request when the verification succeeds in all the manners, to further improve the security of the connection between the frontend and the backend.

Optionally, step 302 includes the following steps.
(1) Load a file corresponding to the request.
(2) Decrypt the file.
(3) Perform a response operation based on a decrypted file.

For example, when the IDE backend is published, a core file may be packaged and encrypted. For example, the core file may be a file in a JS format, namely, a core JS file. An encrypted core file enters a file system in a remote environment. After the IDE backend instance is started, in other words, when the IDE backend is running, a corresponding file is loaded in response to request information. If the loaded file is the encrypted core file, the encrypted core file may be decrypted, and a response operation corresponding to the request is performed based on the core file.

An encryption manner may be set as needed.

For example, binary encryption may be performed in an exclusive OR (exclusive OR, XOR) encryption manner.

FIG. 8 is a schematic flowchart of data processing of an IDE backend according to an embodiment of this application. As shown in FIG. 8, when the IDE backend is published, a core JS file may be packaged into one file and encrypted via an encryptor. An encrypted core JS file, such as pack.jsbin, is published to a file system in a remote environment. After an IDE backend instance is started, in other words, when the IDE backend in FIG. 8 is running, Node.js loads a file. A decryption component may intercept a file loading request from Node.js. If the file loaded by Node.js is the encrypted core JS file, for example, an abc.js file or a def.js file in FIG. 8, a decryption procedure may be started to obtain the core JS file.

Node.js is a JavaScript running environment based on a Chrome V8 engine, and is a development platform that enables JavaScript to run on a server.

In this embodiment of this application, transmission of a file in the IDE backend is performed in an encrypted form, so that security of an IDE backend program can be improved. In addition, a user is unaware of the whole process. In other words, the solution can improve security of the IDE backend when ensuring user experience.

In remote development, messages sent between an IDE frontend and the IDE backend are usually structured messages, and are in a unified data format. In this embodiment of this application, traffic packaging may be performed on a plurality of messages based on data structure knowledge. This reduces network traffic and improves performance of interaction between the frontend and the backend.

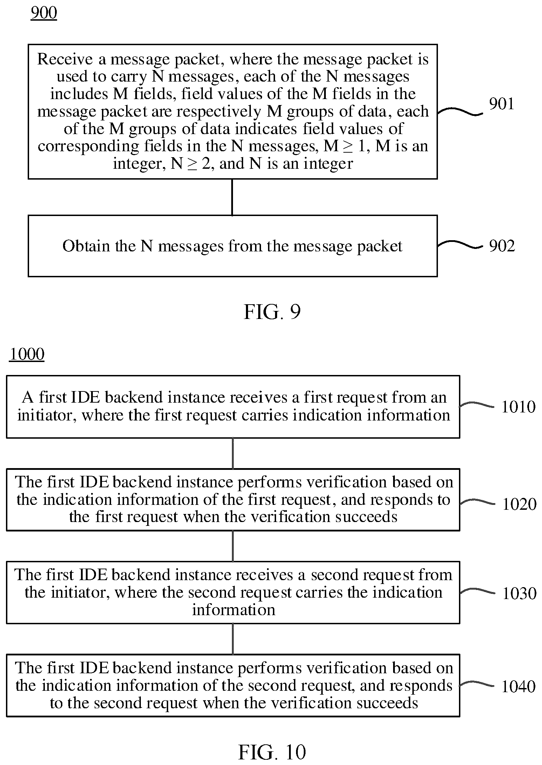

FIG. 9 shows a data transmission method 900 according to an embodiment of this application. For example, the method 900 shown in FIG. 9 may be applied to the IDE shown in FIG. 1. For example, a connection between an IDE frontend and an IDE backend in FIG. 9 may be established in the procedure shown in FIG. 2. The method 900 includes step 901 and step 902. The following describes step 901 and step 902.

901: Receive a message packet, where the message packet is used to carry N messages, each of the N messages includes M fields, field values of the M fields in the message packet are respectively M groups of data, each of the M groups of data indicates field values of corresponding fields in the N messages, M ≥ 1, M is an integer, N ≥ 2, and N is an integer.

For example, an IDE backend instance obtains a message packet through listening from an IDE frontend instance. The IDE backend instance may be the foregoing first IDE backend instance. The IDE frontend instance may be the foregoing first IDE frontend instance.

902: Obtain the N messages from the message packet.

For example, the IDE backend instance obtains the N messages from the message packet.

In other words, data transmission may be performed between the IDE frontend and the IDE backend in a traffic packaging manner. In other words, a plurality of messages are packaged into one message packet, that is, a data packet, and then the message packet is transmitted, so that a receiver may obtain the plurality of messages based on the message packet.

In this embodiment of this application, the messages are packaged, and interaction between the IDE frontend and the IDE backend is implemented based on packaged data, so that network traffic can be reduced, and performance of interaction between the frontend and the backend can be improved.

For example, the request in the method 300 belongs to the N messages. In other words, the request in the method 300 may be carried in the message packet. Alternatively, the request in the method 300 may be received by the first IDE backend instance in a form of the message packet.

That the field values of the M fields in the message packet are respectively the M groups of data may be understood as: The field values of the M fields in the message packet are respectively represented by the M groups of data. The M fields are in one-to-one correspondence with the M groups of data.

The following are three examples (a message 1, a message 2, and a message 3) of a JSON-RPC request. Data formats of the three messages are the same.

```
         Message 1:
         {
             "jsonrpc": "2.0",
             "id": 1
             "method": "textDocument/definition",
             "params": {
                   "textDocument":{
                           "uri": file:///p%3A/mseng/VS code/Playgrounds/cpp/use.cpp
                      },
                "position": {
                 "line":3,
                 "character":12
                 }
             }
         }
         Message 2:
         {
             "jsonrpc": "2.0",
             "id": 2
             "method": "textDocument/definition",
             "params":{
                   "textDocument":{
                           "uri": "file:///p%3A/mseng/VScode/Playgrounds/cpp/use.cpp
                      },
                "position": {
                 "line":7,
                 "character":25
                 }
             }
         }
         Message 3:
         {
             "jsonrpc": "2.0",
             "id": 3
             "method": "textDocument/definition",
             "params":{
                   "textDocument":{
                           "uri": "file:///p%3A/mseng/VScode/Playgrounds/cpp/use.cpp
                      },
                "position": {
                 "line":5,
                 "character" :22
                 }
             }
         }
```

The request may also be referred to as a request object. The request includes a plurality of fields, for example, "jsonrpc", "id", "method", "uri", "line", and "character".

The "jsonrpc" field indicates a JSON-RPC version number. For example, the JSON-RPC version number in the foregoing message is 2.0. The "id" field identifies a message. The "method" field indicates an event triggered by a user. For example, events in the message 1, the message 2, and the message 3 are symbol definition requests, that is, "textDocument/definition".

The "params" field indicates a to-be-transferred parameter. For example, for symbol definition request information, the to-be-transferred parameter may indicate current file information and position information of a symbol whose definition needs to be queried for. Specifically, the "uri" field may indicate the current file information. For example, file address information in the foregoing messages is "file:///p%3A/mseng/VScode/Playgrounds/cpp/use.cpp". The "position" field indicates the position information, for example, which line (line) and which character (character), of the symbol whose definition needs to be queried for. Further, "line" may indicate a row in which the symbol is located. For example, a symbol in the message 1 is located in a 3^{rd} row. "character" may indicate a character in which the symbol whose definition needs to be queried for is located. For example, the symbol in the message 1 is in a 12^{th} character.

In this embodiment of this application, the message 1, the message 2, and the message 3 may be packaged into one message packet, that is, N is 3, and the message packet may be used to carry the message 1, the message 2, and the message 3.

As described above, each of the M groups of data indicates the field values of the corresponding fields in the N messages. For example, for a 1^{st} group of data in the M groups of data, the 1^{st} group of data corresponds to a 1^{st} field in the M fields, and the 1^{st} group of data may indicate a field value of the 1^{st} field in each of the N messages.

For example, in the message 1, the message 2, and the message 3, field values of the "line" fields are respectively 3, 7, and 5. In the message packet that carries the message 1, the message 2, and the message 3, the field values of the "line" fields may include 3, 7, and 5. In other words, 3, 7, and 5 may be used as a group of data that corresponds to the "line" fields and that is in the M groups of data.

Optionally, the M fields include M₁ first-class fields. Field values of first fields in the N messages are different, and the first field is any one of the M₁ first-class fields. Field values of the M₁ first-class fields in the message packet are M₁ groups of data in the M groups of data, N pieces of data included in an i^{th} group of data in the M₁ groups of data respectively indicate field values of an i^{th} first-class field in the M₁ first-class fields in the N messages, 1 ≤ M₁ ≤ M, M₁ is an integer, and i = 1, 2, ..., M₁.

In other words, for a field, if a field value of the field in each of the N messages is different, the field is a first-class field. The M₁ first-class fields are in one-to-one correspondence with the M₁ groups of data in the message packet.

Each of the M₁ groups of data includes N pieces of data, and the N pieces of data respectively indicate the field values of the corresponding fields in the N messages.

For example, in the message 1, the message 2, and the message 3, the field values of the "line" fields are respectively 3, 7, and 5. The "line" field is a first-class field. Field values of the "line" fields in the message packet may be 3, 7, and 5. This group of data, that is, 3, 7, and 5, respectively indicates the field values of the "line" fields in the three messages.

For another example, in the message 1, the message 2, and the message 3, field values of the "character" fields are respectively 12, 25, and 22. The "character" field is a first-class field. The field values of the "character" fields in the message packet may be 12, 25, and 22. This group of data, that is, 12, 25, and 22, respectively indicates the field values of the "character" fields in the three messages.

For example, each of the M₁ groups of data may indicate the field values of the corresponding fields in the N messages. In other words, a field value of each of the M₁ fields in the message packet may include the field values of the corresponding fields in the N messages.

For example, the field values of the "line" fields in the message packet may be 3, 7, and 5. The field values of the "character" fields in the message packet may be 12, 25, and 22.

Alternatively, each of the M₁ groups of data may be represented in a form of an array, and the array includes data indicating the field values of the corresponding fields in the N messages. In other words, the field value of each of the M₁ fields in the message packet may include an array including data that can indicate the field values of the corresponding fields in the N messages.

For example, the field values of the "line" fields in the message packet may be represented as an integer array int[n], where n indicates an identifier of a message, int[1] is 3, int[2] is 7, and int[3] is 5. The field values of the "character" fields in the message packet may be represented as an integer array int[n], where int[1] is 12, int[2] is 25, and int[3] is 22.

Optionally, the M fields include M₂ second-class fields. Field values of second fields in at least two of the N messages are the same, and the second field is any one of the M₂ second-class fields. Field values of the M₂ second-class fields in the message packet are M₂ groups of data in the M groups of data, L pieces of data included in a j^{th} group of data in the M₂ groups of data indicate field values of a j^{th} second-class field in the M₂ second-class fields in the N messages, 1 ≤ M₂ ≤ M, M₂ is an integer, j = 1, 2, ..., M₂, L is less than N, and L is a positive integer.

In other words, for a field, if a field value of the field in each of the at least two of the N messages is the same, the field is a second-class field. The M₂ second-class fields are in one-to-one correspondence with the M₂ groups of data in the message packet.

A data volume included in each of the M₂ groups of data is less than a sum of data volumes of the field values of the corresponding fields in the N messages.

The j^{th} group of data in the M₂ groups of data may include the L pieces of data, and the group of data corresponds to the j^{th} second-class field in the M₂ second-class fields. The field value of the j^{th} second-class field in each of the N messages is represented as one piece of data. In this case, the field values of the j^{th} second-class fields in the N messages include N pieces of data. L is less than N. L may be a quantity of different field values of j^{th} second-class fields in the N messages. For example, in the N messages, if field values of j^{th} second-class fields in N₁ messages are 1, field values of j^{th} second-class fields in N₂ messages are 2, and a quantity of different field values is 2, L may be 2. For another example, L is 1 when the field values of the j^{th} second-class fields in the N messages are the same.

For example, in the message 1, the message 2, and the message 3, fields such as "jsonrpc", "method", and "uri" each have a same field value, and these fields may be referred to as constant fields. The constant field is a second-class field. In this case, L may be 1. In other words, one group of data corresponding to the constant fields may include only one piece of data, and the data may indicate field values of corresponding constant fields in the N messages. Field values of the "jsonrpc" fields in the message packet may be "2.0", and "2.0" may indicate field values of the "jsonrpc" fields in the three messages. Field values of the "method" fields in the message packet may be "textDocument/definition", and "textDocument/definition" may indicate field values of the "method" fields in the three messages. Field values of the "uri" fields in the message packet may be "file:///p%3A/mseng/VScode/Playgrounds/cpp/use.cpp", and "file:///p%3A/mseng/VScode/Playgrounds/cpp/use.cpp" may indicate field values of the "jsonrpc" fields in the three messages.

When the plurality of messages are packaged, for a field, if there are same field values in the plurality of messages, the same field values may be compressed, and only one of the field values is retained. In other words, for the field, the message packet may include only a different field value of the field in each of the plurality of messages. Based on this, this packaging manner can reduce a size of the message packet, and further reduce the network traffic.

Optionally, the M fields include M₃ third-class fields. Field values of third fields in the N messages can be determined based on a function, and the third field is any one of the M₃ third-class fields. Field values of the M₃ third-class fields in the message packet are M₃ groups of data in the M groups of data, a function included in a k^{th} group of data in the M₃ groups of data is used to determine field values of a k^{th} third-class field in the M₃ third-class fields in the N messages, 1 ≤ M₃ ≤ M, M₃ is an integer, and k = 1, 2, ..., M₃.

In other words, for a field, if a field value of the field in each of the N messages can be determined based on a function, the field is a third-class field. The M₃ third-class fields are in one-to-one correspondence with the M₃ groups of data in the message packet.

Each of the M₃ groups includes a function, and the function is used to determine the field values of the corresponding fields in the N messages.

For example, in the message 1, the message 2, and the message 3, field values of the "id" fields are respectively 1, 2, and 3. The field value of the "id" field may be determined based on a linear function f(n) = n, where n is an identifier of a message. "id" is a first-class field. The field values of the "id" fields in the message packet may be represented as n, and n may indicate field values of the "id" fields in the three messages.

When the plurality of messages are packaged, the function indicates the corresponding field values. This packaging manner can reduce the size of the message packet, and further reduce the network traffic.

A data format of a packaged message packet may be the same as data formats of the messages before packaging.

For example, a packaged message packet 1 may be represented as:

```
         {
             "jsonrpc": "2.0",
             "id": n
             "method": "textDocument/definition",
             "params": {
                 "textDocument": {
                           "uri": "file:///p%3A/mseng/VScode/Playgrounds/cpp/use.cpp
                      },
                "position": {
                 "line":int[n],
                 "character":int[n]
                 }
         }
```

It should be understood that the foregoing is merely an example. In actual application, field values of only one or two types of fields may be processed. This is not limited in this embodiment of this application.

Optionally, the message packet includes a numeral corresponding to a string in the N messages.

In other words, the string in the N messages is converted into the numeral.

For example, a field name in the N messages is a string, and in the message packet, the field name may be represented by a corresponding numeral.

For another example, some field values in the N messages are strings, and in the message packet, the some field values may be represented by corresponding numerals.

For example, a correspondence between a string and a numeral may be stored in a string pooling (String pooling). When the N messages are packaged, the string in the N messages may be converted into the corresponding numeral based on the String pooling.

When the plurality of messages are packaged, a string is converted into a corresponding numeral, so that the size of the message packet can be reduced, and the network traffic can be further reduced.

For example, a packaged message packet 2 may be represented as:

```
         {
             "1": "2",
             "3": n
             "4": "5/6",
             "7":{
                  "5":{
                            "8": "9"
                      },
                "10":{
                 "11":int[n],
                 "12":int[n]
                 }
             }
         }
```

The string pool may be: "jsonrpc": "1", "2.0": "2", "id": "3", "method": "4", "textDocument": "5", "definition": "6", "params": "7", "uri": "8", "file:///p%3A/mseng/VScode/Playgrounds/cpp/use.cpp": "9", "position": "10", "line": "11", and "character": "12". "jsonrpc": "1" indicates that a string "jsonrpc" corresponds to a numeral "1". "2.0": "2" indicates that a string "2.0" corresponds to a numeral "2", and so on.

A manner in which a string is represented by a numeral may alternatively be used in combination with the foregoing another packaging manner.

For example, the i^{th} group of data in the M₁ groups of data includes the N pieces of data, and the i^{th} group of data corresponds to the i^{th} first-class field in the M₁ first-class fields. When the N messages are packaged, if the field values of the i^{th} first-class fields in the N messages are respectively N different strings, the N strings may be respectively converted into N corresponding numerals, and the N corresponding numerals may be represented in an array form. In other words, even if the field values of the i^{th} first-class fields are not numerals, the i^{th} group of data in the M₁ groups of data may be represented in an array form.

It should be understood that the foregoing is merely an example, and the string manner is combined with the foregoing another packaging manner in another manner. This is not limited in this embodiment of this application.

It may be understood that, in some embodiments, a field type in a message may include only a first-class field. Similarly, in some embodiments, the field type in the message may include only a second-class field or only a third-class field.

In some other embodiments, the field type in the message may include a first-class field, a second-class field, and a third-class field.

In some other embodiments, the field type in the message may include any two of a first-class field, a second-class field, and a third-class field. For example, the field type in the message may include only the first-class field and the second-class field. For another example, the field type in the message may include only the first-class field and the third-class field. For another example, the field type in the message may include only the second-class field and the third-class field.

It may be understood that the foregoing field types and packaging manners are merely instances of packaging the plurality of messages. In actual application, the message may alternatively include more types of fields, and may alternatively be packaged in more manners.

FIG. 10 shows a remote development method 1000 according to an embodiment of this application. The method 1000 may be considered as a specific implementation of the method 300. To avoid repetition, some descriptions are appropriately omitted when the method 1000 is described.

The method 1000 includes step 1010 to step 1040.

1010: A first IDE backend instance receives a first request from an initiator, where the first request carries indication information.

1020: The first IDE backend instance performs verification based on the indication information of the first request, and responds to the first request when the verification succeeds.

1030: The first IDE backend instance receives a second request from the initiator, where the second request carries the indication information.

1040: The first IDE backend instance performs verification based on the indication information of the second request, and responds to the second request when the verification succeeds.

It should be noted that, in this embodiment of this application, "first" in the "first request" and "second" in the "second request" are merely used to specify that the "first request" and the "second request" are different requests, and have no other limiting function. All descriptions about the "request" in the method 300 are applicable to the "first request" and the "second request". Details are not described herein. For example, the first request may be the request 1 in FIG. 6, and the second request may be the request 2 in FIG. 6.

In the method 1000, both the first request and the second request carry the indication information. For specific descriptions of the indication information, refer to the method 300. Details are not described herein. In other words, when the initiator initiates different requests, the different requests may carry the same indication information. Further, each time the initiator initiates a request, the request may carry the same indication information. In this way, in comparison with an authentication manner in which verification is performed only once, in the solutions in embodiments of this application, when the initiator initiates different requests, all the requests need to carry the indication information. After receiving the different requests, the first IDE backend instance needs to perform verification for each of the requests, so that security of remote development can be further improved, and access by an unauthorized user can be avoided. For example, after obtaining a listening port of the first IDE backend instance, the unauthorized user pretends to be the initiator to initiate a request. In this embodiment of this application, after receiving different requests, the first IDE backend instance needs to perform the verification for each of the requests, so that the security of the remote development can be further improved, and the access by the unauthorized user can be avoided.

Optionally, the indication information of the first request indicates a user associated with the first request, and that the verification succeeds includes that a user corresponding to the first IDE backend instance is the same as the user associated with the first request.

The user associated with the first request is the same as a user associated with the second request. In other words, the indication information of the second request indicates the user associated with the second request, and that the verification succeeds includes that the user corresponding to the first IDE backend instance is the same as the user associated with the second request.

Optionally, the indication information includes a user ID.

Specifically, the indication information includes a user ID of the user associated with the first request. In other words, the indication information includes a user ID of the user associated with the second request.

Optionally, the initiator is a first IDE frontend instance.

Optionally, the initiator is a second IDE backend instance.

Optionally, the indication information includes a token file of the user associated with the first request.

In other words, the indication information includes a token file of the user associated with the second request.

In other words, each time the initiator initiates a request to the first IDE backend instance, the token file may be carried as an identity authentication password. This can further improve the security of the remote development.

Optionally, the indication information indicates a version used by the initiator, and that the verification succeeds includes that a version used by the first IDE backend instance matches the version indicated by the indication information.

Optionally, responding to the first request includes: obtaining a file corresponding to the first request; decrypting the file; and performing a response operation based on a decrypted file.

Optionally, responding to the second request includes: obtaining a file corresponding to the second request; decrypting the file; and performing a response operation based on a decrypted file.

Optionally, the first request and the second request are requests received by the first IDE backend instance in a form of message packets.

Optionally, the message packet is used to carry N messages, each of the N messages includes M fields, field values of the M fields in the message packet are M groups of data, each of the M groups of data indicates field values of corresponding fields in the N messages, M ≥ 1, M is an integer, N ≥ 2, and N is an integer.

Optionally, the M fields include M₁ first-class fields, field values of first fields in the N messages are different, the first field is any one of the M₁ first-class fields, field values of the M₁ first-class fields in the message packet are M₁ groups of data in the M groups of data, N pieces of data included in an i^{th} group of data in the M₁ groups of data respectively indicate field values of an i^{th} first-class field in the M₁ first-class fields in the N messages, 1 ≤ M₁ ≤ M, M₁ is an integer, and i = 1, 2, ..., M₁.

Optionally, the M fields include M₂ second-class fields, field values of second fields in at least two of the N messages are the same, the second field is any one of the M₂ second-class fields, field values of the M₂ second-class fields in the message packet are M₂ groups of data in the M groups of data, L pieces of data included in a j^{th} group of data in the M₂ groups of data indicate field values of a j^{th} second-class field in the M₂ second-class fields in the N messages, 1 ≤ M₂ ≤ M, M₂ is an integer, j = 1, 2, ..., M₂, L is less than N, and L is a positive integer.

Optionally, the M fields include M₃ third-class fields, field values of third fields in the N messages can be determined based on a function, the third field is any one of the M₃ third-class fields, field values of the M₃ third-class fields in the message packet are M₃ groups of data in the M groups of data, a function included in a k^{th} group of data in the M₃ groups of data is used to determine field values of a k^{th} third-class field in the M₃ third-class fields in the N messages, 1 ≤ M₃ ≤ M, M₃ is an integer, and k = 1, 2, ..., M₃.

For specific descriptions and beneficial effects of the method 1000, refer to the foregoing embodiments. For brevity of description, details are not described herein.

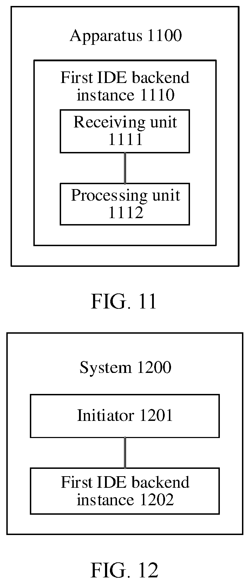

FIG. 11 is a block diagram of a structure of a remote development apparatus according to an embodiment of this application. An apparatus 1100 shown in FIG. 11 includes a first IDE backend instance 1110, and the first IDE backend instance 1110 includes a receiving unit 1111 and a processing unit 1112.

The receiving unit 1111 is configured to receive a first request from an initiator, where the first request carries indication information.

The processing unit 1112 is configured to: perform verification based on the indication information of the first request, and respond to the first request when the verification succeeds.

The receiving unit 1111 is further configured to receive a second request from the initiator, where the second request carries the indication information.

The processing unit 1112 is further configured to: perform verification based on the indication information of the second request, and respond to the second request when the verification succeeds.

For specific functions and beneficial effects of the receiving unit 1111 and the processing unit 1112, refer to the foregoing embodiments. For brevity, details are not described herein.

In some embodiments, the receiving unit 1111 and the processing unit 1112 may be implemented by a processor.

FIG. 12 is a block diagram of a structure of a remote development system according to an embodiment of this application. A system 1200 shown in FIG. 12 includes an initiator 1201 and a first IDE backend instance 1202.

The first IDE backend instance 1202 is configured to: receive a first request from the initiator, perform verification based on indication information of the first request, and respond to the first request when the verification succeeds; and receive a second request from the initiator, perform verification based on the indication information of the second request, and respond to the second request when the verification succeeds, where both the first request and the second request carry the indication information.

For specific functions and beneficial effects of the initiator 1201 and the first IDE backend instance 1202, refer to the foregoing embodiments. For brevity, details are not described herein.

An embodiment of this application further provides a computer device, including a processor and a memory. The processor is configured to: be coupled to the memory, and read and execute instructions and/or program code in the memory, to perform the steps in the foregoing method embodiments.

It should be understood that the processor may be a chip. For example, the processor may be a field programmable gate array (field programmable gate array, FPGA), an application-specific integrated circuit (application-specific integrated circuit, ASIC), a system-on-chip (system-on-chip, SoC), a central processing unit (central processor unit, CPU), a network processor (network processor, NP), a digital signal processing circuit (digital signal processor, DSP), a micro controller unit (micro controller unit, MCU), a programmable controller (programmable logic device, PLD), another programmable logic device, a discrete gate or a transistor logic device, a discrete hardware component, or another integrated chip.

In an implementation process, the steps in the foregoing methods may be implemented through a hardware integrated logical circuit in the processor, or by using instructions in a form of software. The steps in the methods disclosed with reference to embodiments of this application may be directly performed by a hardware processor, or may be performed by a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein.

It should be noted that, the processor in this embodiment of this application may be an integrated circuit chip, and has a signal processing capability. In an implementation process, the steps in the foregoing method embodiments may be implemented through a hardware integrated logical circuit in the processor, or by using instructions in a form of software. A general-purpose processor may be a microprocessor, or the processor may be any conventional processor or the like. The steps in the methods disclosed with reference to embodiments of this application may be directly performed by a hardware decoding processor, or may be performed by a combination of hardware in a decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and the method described in this specification is intended to include, but not limited to, these memories and any memory of another proper type.

According to the methods provided in embodiments of this application, this application further provides a computer program product. The computer program product includes computer program code, and when the computer program code is run on a computer, the computer is enabled to perform the steps in the foregoing embodiments.

According to the methods provided in embodiments of this application, this application further provides a computer-readable medium. The computer-readable medium stores program code, and when the program code is run on a computer, the computer is enabled to perform the steps in the foregoing embodiments.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement, to achieve the objectives of the solutions in embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps in the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A remote development method, applied to an integrated development environment, IDE, wherein the method comprises:
receiving, by a first IDE backend instance, a first request from an initiator, wherein the first request carries indication information;
performing, by the first IDE backend instance, verification based on the indication information of the first request, and responding to the first request when the verification succeeds;
receiving, by the first IDE backend instance, a second request from the initiator, wherein the second request carries the indication information;
performing, by the first IDE backend instance, verification based on the indication information of the second request, and responding to the second request when the verification succeeds; and
**characterized in that**
the indication information indicates a version used by the initiator, and that the verification succeeds comprises that a version used by the first IDE backend instance matches the version indicated by the indication information.

2. The method according to claim 1, wherein the indication information comprises a user ID.

3. The method according to claim 1 or 2, wherein the initiator is a first IDE frontend instance.

4. The method according to claim 1 or 2, wherein the initiator is a second IDE backend instance.

5. The method according to any one of claims 1 to 4, wherein the indication information comprises a token file of the user associated with the first request.

6. The method according to any one of claims 1 to 5, wherein the responding to the first request comprises:
obtaining a file corresponding to the first request;
decrypting the file; and
performing a response operation based on a decrypted file.

7. The method according to any one of claims 1 to 6, wherein the first request and the second request are requests received by the first IDE backend instance in a form of message packets.

8. A remote development apparatus, wherein the apparatus comprises a first integrated development environment, IDE backend instance, and the first IDE backend instance comprises:
a receiving unit, configured to receive a first request from an initiator, wherein the first request carries indication information; and
a processing unit, configured to: perform verification based on the indication information of the first request, and respond to the first request when the verification succeeds, wherein
the receiving unit is further configured to receive a second request from the initiator, wherein the second request carries the indication information;
the processing unit is further configured to: perform verification based on the indication information of the second request, and respond to the second request when the verification succeeds; and
**characterized in that**
the indication information indicates a version used by the initiator, and that the verification succeeds comprises that a version used by the first IDE backend instance matches the version indicated by the indication information.

9. The apparatus according to claim 8, wherein the indication information comprises a user ID.

10. The apparatus according to claim 8 or 10, wherein the initiator is a first IDE frontend instance; or,
wherein the initiator is a second IDE backend instance.

11. The apparatus according to any one of claims 8 to 11, wherein the indication information comprises a token file of the user associated with the first request.

## Patentansprüche

1. Fernentwicklungsverfahren, das auf eine integrierte Entwicklungsumgebung, IDE, angewendet wird, wobei das Verfahren umfasst:
Empfangen, durch eine erste IDE-Backend-Instanz, einer ersten Anforderung von einem Initiator, wobei die erste Anforderung Angabeinformationen trägt;
Durchführen, durch die erste IDE-Backend-Instanz, einer Verifizierung basierend auf den Angabeinformationen der ersten Anforderung und Antworten auf die erste Anforderung, wenn die Verifizierung erfolgreich ist;
Empfangen, durch die erste IDE-Backend-Instanz, einer zweiten Anforderung von dem Initiator, wobei die zweite Anforderung die Angabeinformationen trägt;
Durchführen, durch die erste IDE-Backend-Instanz, der Verifizierung basierend auf den Angabeinformationen der zweiten Anforderung und Antworten auf die zweite Anforderung, wenn die Verifizierung erfolgreich ist; und
**dadurch gekennzeichnet, dass**
die Angabeinformationen eine Version, die durch den Initiator verwendet wird, angeben und dass die Verifizierung erfolgreich ist, umfasst, dass eine Version, die durch die erste IDE-Backend-Instanz verwendet wird, mit der Version, die durch die Angabeinformationen angegeben wird, übereinstimmt.

2. Verfahren nach Anspruch 1, wobei die Angabeinformationen eine Benutzer-ID umfassen.

3. Verfahren nach Anspruch 1 oder 2, wobei der Initiator eine erste IDE-Frontend-Instanz ist.

4. Verfahren nach Anspruch 1 oder 2, wobei der Initiator eine zweite IDE-Backend-Instanz ist.

5. Verfahren nach einem der Ansprüche 1 bis 4, wobei die Angabeinformationen eine Token-Datei des Benutzers, der mit der ersten Anforderung verknüpft ist, umfassen.

6. Verfahren nach einem der Ansprüche 1 bis 5, wobei das Antworten auf die erste Anforderung umfasst:
Erhalten einer Datei, die der ersten Anforderung entspricht;
Entschlüsseln der Datei; und
Durchführen einer Antwortoperation basierend auf einer entschlüsselten Datei.

7. Verfahren nach einem der Ansprüche 1 bis 6, wobei die erste Anforderung und die zweite Anforderung Anforderungen, die durch die erste IDE-Backend-Instanz in einer Form von Nachrichtenpaketen empfangen werden, sind.

8. Fernentwicklungsvorrichtung, wobei die Vorrichtung eine erste Backend-Instanz einer integrierten Entwicklungsumgebung, IDE, umfasst und die erste IDE-Backend-Instanz umfasst:
eine Empfangseinheit, die konfiguriert ist, um eine erste Anforderung von einem Initiator zu empfangen, wobei die erste Anforderung Angabeinformationen trägt; und
eine Verarbeitungseinheit, die konfiguriert ist zum: Durchführen einer Verifizierung basierend auf den Angabeinformationen der ersten Anforderung und Antworten auf die erste Anforderung, wenn die Verifizierung erfolgreich ist, wobei
die Empfangseinheit ferner konfiguriert ist, um eine zweite Anforderung von dem Initiator zu empfangen, wobei die zweite Anforderung die Angabeinformationen trägt;
die Verarbeitungseinheit ferner konfiguriert ist zum: Durchführen einer Verifizierung basierend auf den Angabeinformationen der zweiten Anforderung und Antworten auf die zweite Anforderung, wenn die Verifizierung erfolgreich ist; und
**dadurch gekennzeichnet, dass**
die Angabeinformationen eine Version, die durch den Initiator verwendet wird, angeben und dass die Verifizierung erfolgreich ist, umfasst, dass eine Version, die durch die erste IDE-Backend-Instanz verwendet wird, mit der Version, die durch die Angabeinformationen angegeben wird, übereinstimmt.

9. Vorrichtung nach Anspruch 8, wobei die Angabeinformationen eine Benutzer-ID umfassen.

10. Vorrichtung nach Anspruch 8 oder 10, wobei der Initiator eine erste IDE-Frontend-Instanz ist; oder
wobei der Initiator eine zweite IDE-Backend-Instanz ist.

11. Vorrichtung nach einem der Ansprüche 8 bis 11, wobei die Angabeinformationen eine Token-Datei des Benutzers, der mit der ersten Anforderung verknüpft ist, umfassen.

## Revendications

1. Procédé de développement à distance, appliqué à un environnement de développement intégré, IDE, dans lequel le procédé comprend :
la réception, par une première instance d'arrière-plan IDE, d'une première demande en provenance d'un initiateur, dans lequel la première demande transporte des informations d'indication ;
la réalisation, par la première instance d'arrière-plan IDE, d'une vérification sur la base des informations d'indication de la première demande, et la réponse à la première demande lorsque la vérification réussit ;
la réception, par la première instance d'arrière-plan IDE, d'une seconde demande en provenance de l'initiateur, dans lequel la seconde demande transporte les informations d'indication ;
la réalisation, par la première instance d'arrière-plan IDE, d'une vérification sur la base des informations d'indication de la seconde demande, et la réponse à la seconde demande lorsque la vérification réussit ; et
**caractérisé en ce que**
les informations d'indication indiquent une version utilisée par l'initiateur, et le fait que la vérification réussit comprend le fait qu'une version utilisée par la première instance d'arrière-plan IDE correspond à la version indiquée par les informations d'indication.

2. Procédé selon la revendication 1, dans lequel les informations d'indication comprennent un ID utilisateur.

3. Procédé selon la revendication 1 ou 2, dans lequel l'initiateur est une première instance de premier plan IDE.

4. Procédé selon la revendication 1 ou 2, dans lequel l'initiateur est une seconde instance d'arrière-plan IDE.

5. Procédé selon l'une quelconque des revendications 1 à 4, dans lequel les informations d'indication comprennent un fichier de jetons de l'utilisateur associé à la première demande.

6. Procédé selon l'une quelconque des revendications 1 à 5, dans lequel la réponse à la première demande comprend :
l'obtention d'un fichier correspondant à la première demande ;
le déchiffrement du fichier ; et
la réalisation d'une opération de réponse sur la base d'un fichier déchiffré.

7. Procédé selon l'une quelconque des revendications 1 à 6, dans lequel la première demande et la seconde demande sont des demandes reçues par la première instance d'arrière-plan IDE sous forme de paquets de messages.

8. Appareil de développement à distance, dans lequel l'appareil comprend une première instance d'arrière-plan d'environnement de développement intégré, IDE, et la première instance d'arrière-plan IDE comprend :
une unité de réception, configurée pour recevoir une première demande en provenance d'un initiateur, dans lequel la première demande transporte des informations d'indication ; et
une unité de traitement, configurée pour : réaliser une vérification sur la base des informations d'indication de la première demande, et répondre à la première demande lorsque la vérification réussit, dans lequel
l'unité de réception est en outre configurée pour recevoir une seconde demande en provenance de l'initiateur, dans lequel la seconde demande transporte les informations d'indication ;
l'unité de traitement est en outre configurée pour : réaliser une vérification sur la base des informations d'indication de la seconde demande, et répondre à la seconde demande lorsque la vérification réussit ; et
**caractérisé en ce que**
les informations d'indication indiquent une version utilisée par l'initiateur, et le fait que la vérification réussit comprend le fait qu'une version utilisée par la première instance d'arrière-plan IDE correspond à la version indiquée par les informations d'indication.

9. Appareil selon la revendication 8, dans lequel les informations d'indication comprennent un ID utilisateur.

10. Appareil selon la revendication 8 ou 10, dans lequel l'initiateur est une première instance de premier plan IDE ; ou,
dans lequel l'initiateur est une seconde instance d'arrière-plan IDE.

11. Appareil selon l'une quelconque des revendications 8 à 11, dans lequel les informations d'indication comprennent un fichier de jetons de l'utilisateur associé à la première demande.
